# EUROPEAN PATENT SPECIFICATION

(11) **EP 4 015 943 B1**
(45) Date of publication and mention of the grant of the patent: **19.11.2025**
(21) Application number: 21215455.3
(22) Date of filing: 17.12.2021
(51) Int. Cl.: F25B 45/00, F25B 49/00, B60H 1/00, F25B 43/00

(54) **APPARATUS FOR CHARGING A REFRIGERATION SYSTEM OF A VEHICLE**
VORRICHTUNG ZUM LADEN EINES KÜHLSYSTEMS EINES FAHRZEUGS
APPAREIL DE CHARGEMENT D'UN SYSTÈME DE RÉFRIGÉRATION D'UN VÉHICULE

(30) Priority: 18.12.2020 IT 202000031481
(43) Date of publication of application: 22.06.2022
(73) Proprietor: NEXION S.p.A., 42015 Correggio (RE) (IT)
(72) Inventor: CORGHI, Giulio, 42015 CORREGGIO (IT)
(74) Representative: Conti, Marco

(56) References cited:
- EP-A1- 3 040 652
- US-A- 4 982 576
- US-A- 5 802 859
- US-A1- 2013 319 025
- US-A1- 2014 260 350

## Description

This invention relates to a method for charging a refrigeration system of a vehicle.

The invention addresses the field of charging apparatuses connectable to vehicle refrigeration systems to charge them with refrigerant fluid and oil. Examples of such apparatuses are described in the following patent documents: US20170336112A1, US20140174111 A1, US20140260354A1, US8406931B2, US7854133B2, EP2856045B1, US8261564B2, US2013319325A1 and US2014260350A1.

In this field, there is the need for a diagnostic tool to test for the correct operation of the charging apparatus and its components. In effect, the apparatus may require maintenance or it may be necessary to carry out certain operations such as charging the tanks with refrigerant fluid and oil or emptying a container of waste oil; in this context, the operator needs to be able to use a tool which allows them to test the operating state of the circuit and to know what maintenance and operations have to be carried out. Document US 2013/319025 A1 reveals a method for charging a refrigeration system of a vehicle according the preamble of claim 1.

This invention has for an aim to provide a method for charging a vehicle refrigeration system, to overcome at least one of the above mentioned drawbacks of the prior art.

This aim is fully achieved by the method of this invention as defined in the appended claims.

This invention relates to a method for charging a refrigeration system of a vehicle by means of an apparatus.

The apparatus comprises a circuit, configured to be connected up to the refrigeration system of the vehicle; the circuit is configured to extract refrigerant fluid from the refrigeration system of the vehicle.

The circuit includes a distiller. The distiller is configured to receive the refrigerant fluid extracted from the refrigeration system of the vehicle and to separate oil and a gas fraction of the refrigerant fluid. In effect, in the distiller, the refrigerant fluid is preferably heated so as to make it evaporate; the oil, on the other hand, remains in the liquid state. The evaporated fraction of refrigerant fluid is in the gaseous state and is thus separated from the oil. Also imaginable, however, is a distiller without a heating system and where the gas fraction is extracted from above.

The circuit includes a compressor, configured to receive the gas fraction of refrigerant fluid from the distiller and to compress it.

The circuit includes a waste oil collector to collect the oil separated by the distiller. In effect, at the end of the distillation process, all the refrigerant fluid has evaporated and the waste oil remains at the bottom of the distiller.

The circuit includes a refrigerant fluid tank, containing refrigerant fluid and configured to receive the refrigerant fluid compressed by the compressor.

The circuit includes a vacuum pump, configured to create a negative pressure in the refrigeration system of the vehicle.

The circuit includes a charging oil tank, configured to contain the oil used for charging. The circuit is configured to charge the refrigeration system of the vehicle with the charging oil from the charging oil tank and with the refrigerant fluid from the refrigerant fluid tank. In effect, after the refrigerant fluid has been extracted, the vacuum pump is started to create a vacuum in the vehicle's refrigeration system in order to remove traces of moisture and to create the conditions for subsequent filling with oil and refrigerant liquid. Thus, charging follows on after starting the vacuum pump.

The apparatus comprises a diagnostic system. The diagnostic system includes a plurality of sensors associated with the circuit (or with one of its components) and configured to detect measurement parameters representing physical quantities linked to one or more of the circuit components.

The apparatus comprises a plurality of actuators configured to control one or more of the components of the circuit.

The apparatus comprises a control unit. The control unit is configured to operate the apparatus in (or set it to) an online configuration (i.e., a connected configuration), in which the apparatus is connected to the refrigeration system of the vehicle to perform charging operations, and in an offline configuration (i.e., a disconnected configuration), in which the apparatus is disconnected from the refrigeration system of the vehicle.

Regarding the definition of online configuration, we observe that the concept of online configuration includes, *inter alia,* the following examples:
(i) apparatus mechanically connected to the vehicle refrigeration system, also for the purpose of data transfer;
(ii) non-mechanically connected equipment, for data transfer and or charging, for example via a non-mechanical Wireless connection (which in any case can also allow electric charging).

Furthermore, regarding the definition of offline configuration, we observe that the concept of offline configuration includes, *inter alia,* the following examples:
(i) equipment mechanically disconnected from the vehicle refrigeration system and absence of any other non-mechanical connection for the purpose of data transfer of charging;
(ii) equipment disconnected from the vehicle's refrigeration system with respect to a wireless connection;
(iii) equipment mechanically linked to the vehicle's refrigeration system but data and / or electricity transfer interrupted.

The control unit is also configured to receive the measurement parameters detected by the sensors of the plurality of sensors and to control the actuators of the plurality of actuators; more specifically, the measurement parameters are received and the actuators controlled at least partly in the offline configuration of the apparatus.

Moreover, the control unit is configured to switch the apparatus between the online configuration and the offline configuration.

However, some of the measurement parameters may be received and the actuators controlled in the online configuration. That way, a user or operator may perform a diagnosis of the apparatus. In effect, in an embodiment, the user can enable or disable certain components by means of specific actuators and can read the values of the measurement parameters detected by the sensors; in this embodiment, a diagnosis of the apparatus, specifically to identify faulty conditions, if any, is performed by the user on the basis of the measurement parameter values read. In another embodiment, the control unit has access to a memory containing reference data and is configured to process the measurement parameters detected by the sensors based on the reference data in order to derive diagnostic information correlated with the operation of the circuit; in this embodiment, the diagnosis of the apparatus is performed by the control unit and the user receives the diagnostic information derived; for example, the diagnostic information may represent a certain faulty condition identified by the control unit.

In an embodiment, the diagnostic system comprises an interface that is connected to the control unit. The interface is configured to allow the user to selectively enable or disable the sensors of the plurality of sensors. The interface is configured to allow the user to selectively control the actuators of the plurality of actuators; the control unit is configured to generate commands to drive the actuators of the plurality of actuators in response to settings received from the user. The interface is configured to allow the user to display the measurement parameters detected by the sensors and/or diagnostic parameters derived therefrom. More specifically, in the case where the control unit derives the diagnostic parameters based on the measurement parameters, the interface is configured to show the diagnostic parameters (and, in one embodiment, the measurement parameters, too).

In an embodiment, the interface is configured to show a synoptic representation of the circuit to a user. More specifically, the synoptic representation is configured to allow the user to selectively enable or disable the sensors of the plurality of sensors and/or to selectively control the actuators of the plurality of actuators through interactions between the user and the synoptic representation. Preferably, the synoptic representation is also configured to show the user the measurement parameters detected by the enabled sensors forming part of the plurality of sensors. The synoptic representation makes interaction between the user and the apparatus particularly easy.

The control unit may be local or remote. The interface may also be local or remote. The interface may be defined by a PC, a laptop, a smartphone or a tablet of the user. The interface comprises an input device configured to receive the settings from the user.

More specifically, in an embodiment in which the interface is a remote interface, the apparatus comprises a remote processor connected to the control unit and to the interface. For example, the remote processor may be the processor of the smartphone or of the tablet. The remote processor is configured to send control signals to the control unit as a function of the settings received from the user (through the interface); the control unit is configured to issue commands to one or more of the actuators of the plurality of actuators, responsive to receiving the control signals. Thus, the user selectively enables or disables the sensors and the actuators through the interface, which may be a remote interface; this allows an expert user to perform a diagnosis of the apparatus without having to travel to the site or workshop where the apparatus is installed.

Preferably, the actuators of the plurality of actuators are selected from the following actuators: a plurality of electrovalves (associated with different legs of the circuit), an actuator of the compressor, configured to control the compressor, an actuator of the vacuum pump, configured to control the vacuum pump.

Preferably, the plurality of sensors includes a first load sensor, associated with the refrigerant fluid tank and configured to detect a measurement parameter representing the weight of the refrigerant fluid tank. The weight of the refrigerant fluid tank represents the quantity of refrigerant fluid it contains. More specifically, the control unit calculates the weight of the refrigerant fluid inside the tank by subtracting the net weight of the tank (known and stored in the memory) from the value of the weight detected. When the quantity of refrigerant fluid in the tank falls below a predetermined minimum value, the system must be charged with refrigerant fluid. The predetermined minimum value is stored in the memory; the memory also includes a library which associates with each type of vehicle to be charged a corresponding predetermined minimum value of refrigerant fluid and the control unit selects the predetermined minimum value as a function of the input information received from the user and representing the type of vehicle to be charged.

Preferably, the plurality of sensors includes a second load sensor, associated with the waste oil collector and with the charging oil tank and configured to detect a measurement parameter representing the weight of the waste oil collector and of the charging oil tank. More specifically, the second load sensor measures the weight of the tanks (plus their supports) together. The control unit calculates the weight of each of the tanks using algorithms which associate a variation of the weight of the tanks with an increase or decrease of the content of one of them and the tank which has undergone the variation is identified based on the steps of the process in progress at the time of the variation; thus, this diagnosis is performed at least partly with the apparatus in the online configuration. For example, if the sensor detects a decrease in the weight of the tanks during the step of charging, the control unit determines that the charging oil tank has been emptied of the quantity of oil corresponding to the decrease in the weight. In an embodiment, the control unit keeps track of these variations to calculate the absolute quantity of oil present in the tanks and allows the user to know when to empty the waste oil tank and to fill the charging oil tank.

In an embodiment, the plurality of sensors includes a plurality of oil load sensors, each of which is associated with a respective oil tank, to measure its respective weight: more specifically, there may be a first oil load sensor associated with the waste oil tank and a second oil load sensor associated with the charging oil tank; if an additional charging oil tank is provided, there may also be a third oil load sensor associated with the additional charging oil tank. These oil load sensors may be provided in addition or alternatively to the second load sensor.

Preferably, the plurality of sensors includes a first pressure sensor, associated with an inlet or outlet leg of the circuit, connectable to the refrigeration system of the vehicle and configured to detect a measurement parameter representing a pressure of the refrigerant fluid in the inlet or outlet leg.

Preferably, the plurality of sensors includes a second pressure sensor, associated with the refrigerant fluid tank and configured to detect a measurement parameter representing a pressure of the refrigerant fluid in the refrigerant fluid tank.

Preferably, the plurality of sensors includes a temperature sensor, associated with the refrigerant fluid tank and configured to detect a measurement parameter representing a temperature of the refrigerant fluid in the refrigerant fluid tank.

More specifically, the control unit determines, as a function of the temperature and pressure of the refrigerant fluid inside the refrigerant fluid tank and based on the pressure and temperature curves of the refrigerant fluid, whether the tank contains pure refrigerant or also air or other substances. In effect, at a certain temperature, if there is only refrigerant, the pressure has a certain value (given by the curves), whereas the presence of air causes it to have a different pressure. The pressure of the refrigerant fluid may be determined by the second pressure sensor (if provided) or by the first pressure sensor, by driving specific electrovalves to put the refrigerant fluid tank in communication with the circuit leg where the first pressure sensor is installed. Thus, the first and/or the second pressure sensor are useful for determining the presence of air in the refrigerant fluid.

The first pressure sensor can also be used to check the circuit for leaks. More specifically, specific electrovalves are activated to isolate the circuit and to start the vacuum pump to generate negative pressure; the pressure detected by the first sensor is then monitored for changes over time. If there are no significant leaks, the pressure detected by the first sensor remains constant; if there are significant leaks, on the other hand, air enters and the pressure detected by the first sensor increases. Leaks, if any, can then be precisely located by suitably opening and closing the electrovalves.

Preferably, the plurality of sensors includes a compressor sensor, associated with the compressor and configured to detect a measurement parameter representing a speed of the compressor. The compressor sensor may be, for example, a tachymetric sensor that detects the speed of the compressor, or a current sensor that detects the current absorbed by the compressor. The compressor sensor allows checking the operating state of the compressor to identify any faults.

A diagnostic system for an apparatus for charging a refrigeration system of a vehicle is shown, but not part of the invention. The diagnostic system may be installed in an existing apparatus.

This invention provides a method for charging a refrigeration system of a vehicle by means of an apparatus including a circuit and a diagnostic system.

The method comprises a step of connecting the circuit to the refrigeration system of the vehicle and extracting refrigerant fluid. The method comprises a step of receiving at a distiller the refrigerant fluid extracted from the refrigeration system of the vehicle and separating oil and a gas fraction of the refrigerant fluid. The method comprises a step of compressing the gas fraction of the refrigerant fluid using a compressor. The method comprises a step of feeding the refrigerant fluid compressed by the compressor to a refrigerant fluid tank. The method comprises a step of collecting the oil separated by the distiller in a waste oil collector. The method comprises a step of creating a negative pressure in the refrigeration system of the vehicle by means of a vacuum pump. The method comprises a step of charging the refrigeration system of the vehicle with the charging oil from the charging oil tank and with the refrigerant fluid from the refrigerant fluid tank.

The method comprises a step of switching the apparatus, through a control unit, between an online configuration, in which the apparatus is connected to the refrigeration system of the vehicle to perform charging operations, and an offline configuration, in which the apparatus is disconnected from the refrigeration system of the vehicle to perform internal checks for diagnostic purposes. More specifically, in the offline configuration, it is possible to perform a diagnosis of the apparatus itself, independently of the vehicle.

The method comprises a step of detecting, with at least one plurality of sensors associated with the circuit, measurement parameters representing physical quantities linked to one or more of the circuit components. Preferably, this step of detecting the measurement parameters is carried out at least partly in the offline configuration; it might, however, also be carried out in the online configuration.

The method also comprises a step of receiving at the control unit the measurement parameters detected by the sensors of the plurality of sensors. Preferably, this step of receiving the measurement parameters is carried out at least partly in the offline configuration; it might, however, also be carried out in the online configuration.

Through an interface, a user might selectively enable or disable the sensors of the plurality of sensors. Preferably, through the interface, the user can display the measurement parameters detected by the enabled sensors and/or diagnostic parameters derived therefrom.

Preferably, also, the user might, through the interface, selectively control the actuators of the plurality of actuators and the control unit might generate commands to drive the actuators of the plurality of actuators in response to settings received from the user.

In an embodiment, the method comprises a step of processing the measurement parameters with the control unit, based on reference data, and deriving diagnostic information regarding the state of the circuit or a component thereof. The reference data are stored in a memory. Preferably, for each vehicle type of a plurality of vehicle types, the memory includes respective reference data associated with that vehicle type.

In an embodiment, the method comprises a step of providing the user, through the interface, with the measurement parameters and/or the diagnostic information; more specifically, the user interface shows a synoptic representation of the circuit to the user.

In an embodiment, the control unit is configured to set the circuit to a predefined test configuration and to derive the diagnostic information as a function of the measurement parameters detected in the predefined test configuration.

In an embodiment, the method comprises a step of updating the memory by saving new reference data (or new databases) associated with a new vehicle type. More specifically, the memory (or the control unit) receives the new reference data from a remote source through an Internet connection. In another embodiment, the memory can be updated using a USB key (or other data storage medium) in which the updates have previously been stored. In another embodiment, the memory can be updated through the user interface, which receives the new reference data (for example, from a remote source) and sends them to the memory.

In an embodiment, the plurality of sensors includes a first load sensor, associated with the refrigerant fluid tank, so the measurement parameter represents the weight of the refrigerant fluid tank. In the step of processing, the control unit compares the weight of the refrigerant fluid tank detected by the load sensor with a predetermined minimum value and starts the step of charging if the weight of the refrigerant fluid tank exceeds the predetermined minimum value. In this context, the predetermined minimum value is one of the reference data items stored in the memory.

In an embodiment, the plurality of sensors includes a second load sensor, associated with the waste oil collector and with the charging oil tank and configured to detect a measurement parameter representing the weight of the waste oil collector and of the charging oil tank. The control unit is configured to store a history of the values adopted by the measurement parameter representing the weight of the waste oil collector and of the charging oil tank (in the online configuration and/or in the offline configuration) and to derive diagnostic information representing a filling level of the waste oil collector and of the charging oil tank. In an embodiment, the diagnostic information is derived as a function of the values adopted by the measurement parameter representing the weight of the waste oil collector and of the charging oil tank during different stages of charging, when the apparatus is connected to the vehicle (hence in the online configuration).

In an embodiment, the plurality of sensors includes a first pressure sensor, associated with an inlet or outlet leg of the circuit, connectable to the refrigeration system of the vehicle and configured to detect a measurement parameter representing a pressure of the refrigerant fluid in the inlet or outlet leg. The vacuum pump is connected to the inlet or outlet leg. Thus, the control unit starts the vacuum pump to set the circuit to a predefined test configuration and compares a pressure value, or a trend over time of the refrigerant fluid pressure in the inlet or outlet leg, as detected by the first pressure sensor, with a predefined pressure value or a predefined pressure trend. The predefined pressure value and/or the predefined pressure trend are reference data items stored in the memory.

That way, the control unit can derive diagnostic information representing an operating state of the vacuum pump; in effect, if the value reached by the pressure deviates significantly from the predefined value, this may be due to a malfunction of the vacuum pump.

In addition, or alternatively, the control unit may derive diagnostic information representing a presence of leaks in the circuit. In effect, as noted above, by opening or closing specific electrovalves and creating a negative pressure in the circuit using the vacuum pump, leaks in the circuit, if any, allow air to enter the circuit and so the pressure detected by the first sensor increases over time. In this case, therefore, the pressure trend detected deviates from the predefined pressure trend.

This disclosure also provides a diagnostic method for performing a diagnosis of an apparatus for charging a refrigeration system of a vehicle. The method comprises the following steps: switching the apparatus, through a control unit, between an online configuration, in which the apparatus is connected to the refrigeration system of the vehicle to perform charging operations, and an offline configuration, in which the apparatus is disconnected from the refrigeration system of the vehicle to perform internal checks for diagnostic purposes; in the offline configuration, detecting, with at least one plurality of sensors associated with the circuit, measurement parameters representing physical quantities linked to one or more of the circuit components; in the offline configuration, receiving at the control unit the measurement parameters detected by the sensors of the plurality of sensors; in the offline configuration, sending commands to one or more of the components of the circuit by means of a plurality of actuators controlled by the control unit.

These and other features will become more apparent from the following detailed description of a preferred embodiment, illustrated by way of nonlimiting example in the accompanying drawings, in which:

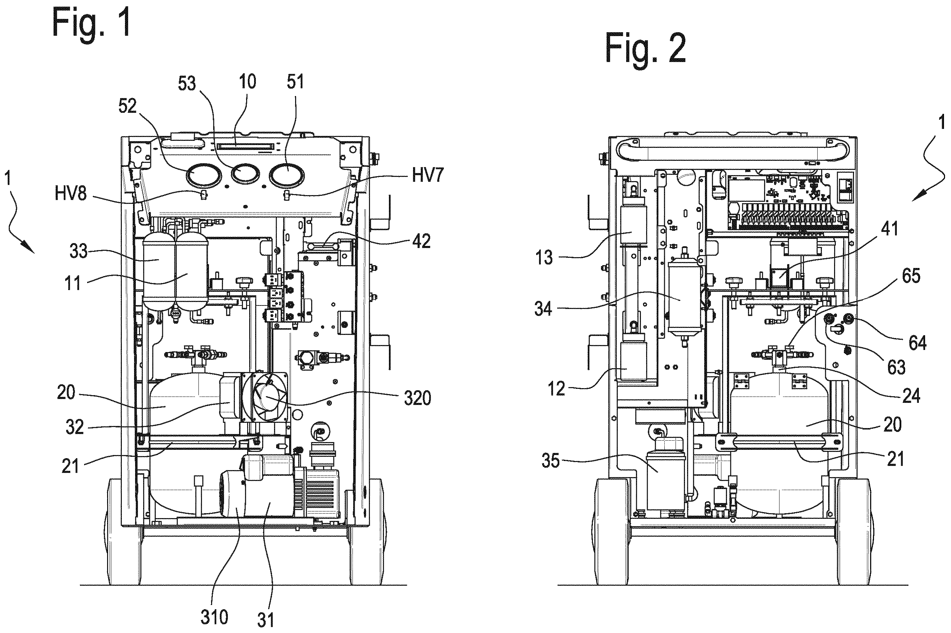

- Figure 1 shows an apparatus in a first view;
- Figure 2 shows the apparatus of Figure 1 in a second view;

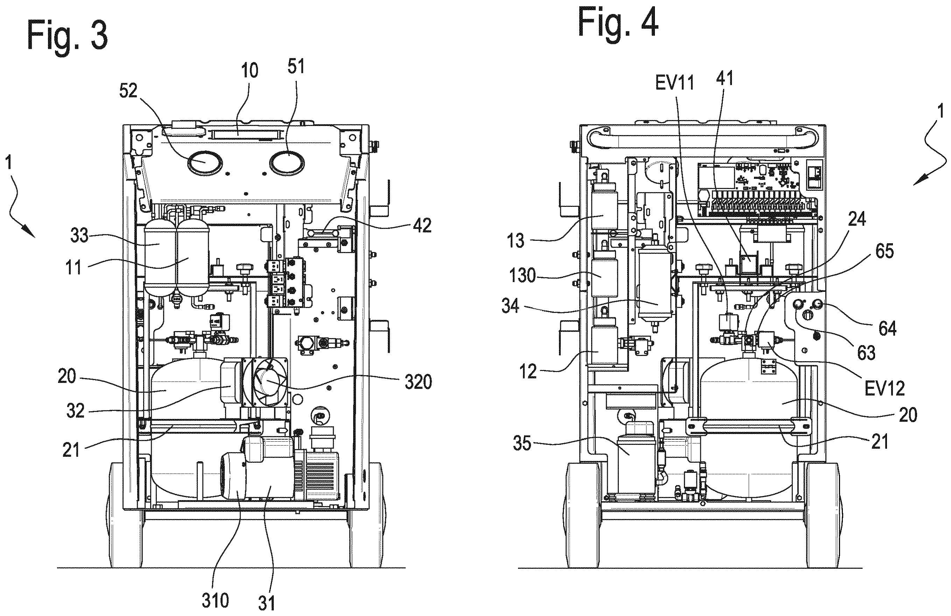

- Figure 3 shows a further embodiment of the apparatus in a first view;
- Figure 4 shows the apparatus of Figure 3 in a second view;

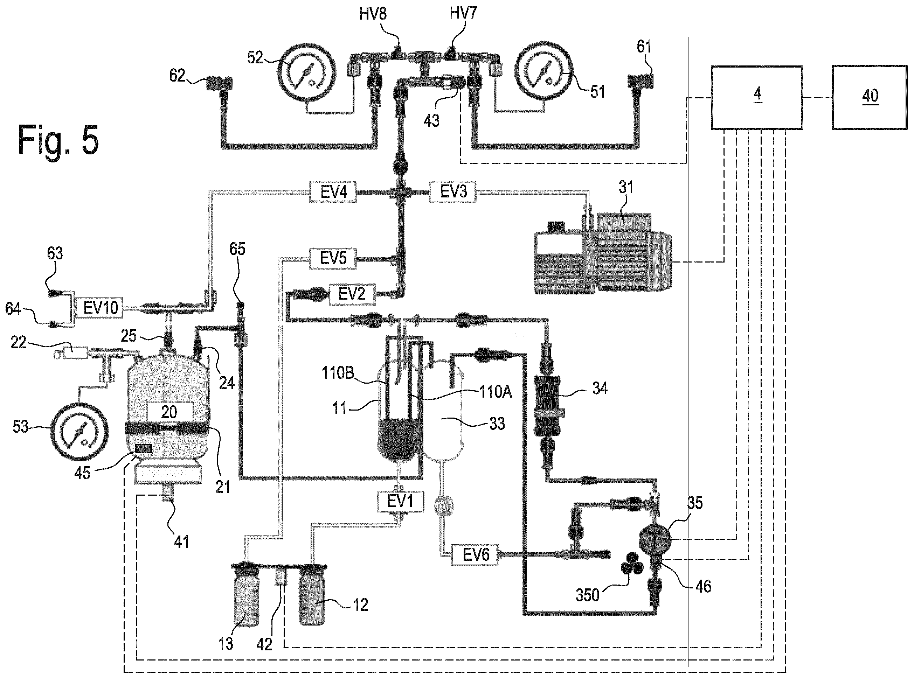

- Figure 5 shows a synoptic representation of the apparatus of Figures 1 and 2;

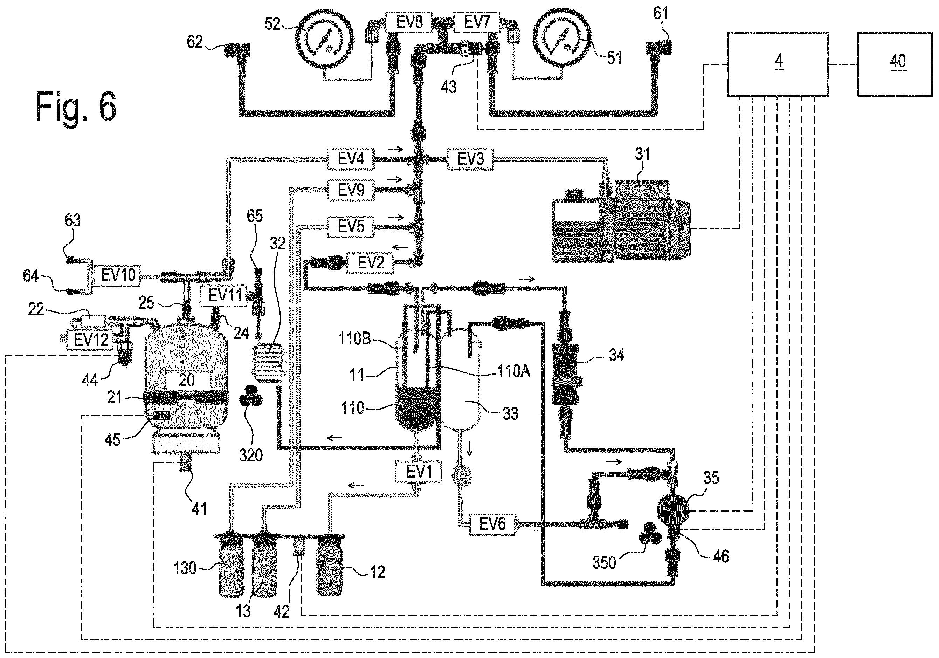

- Figure 6 shows a synoptic representation of the apparatus of Figures 3 and 4;

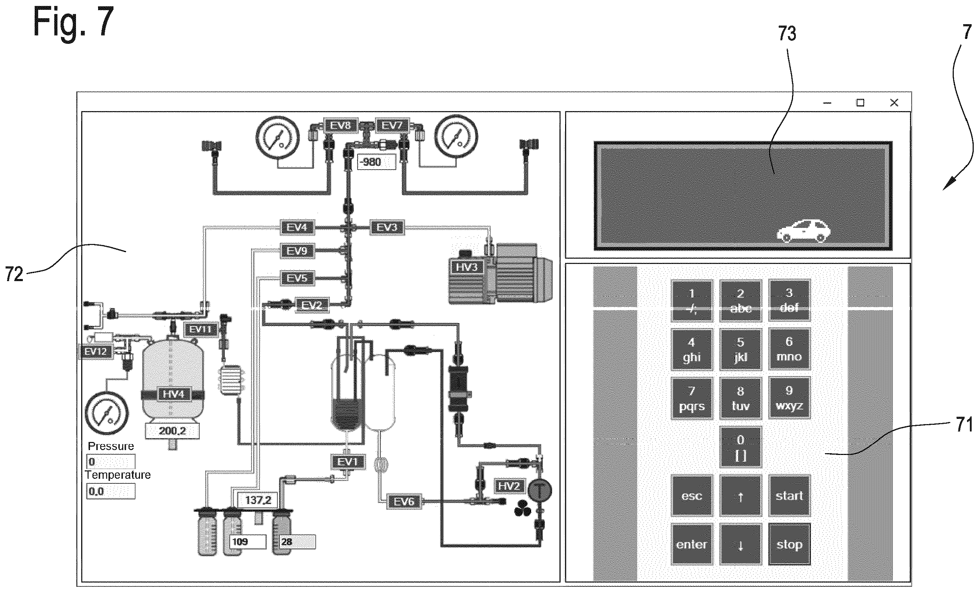

- Figure 7 shows an example of a user interface of the apparatus of Figures 1 and 2 or of Figures 3 and 4.

With reference to the accompanying drawings, the numeral 1 denotes an apparatus for charging a refrigeration system of a vehicle. The apparatus 1 comprises a circuit. The circuit has a first inlet 61, configured to be connected to the vehicle's refrigeration system in a low pressure zone. The circuit has a second inlet 62, configured to be connected to the vehicle's refrigeration system in a high pressure zone. In an embodiment not illustrated, there is a single inlet.

The circuit comprises a distiller 11 which receives the refrigerant fluid from the first inlet 61 or from the second inlet 62. The distiller 11 includes a closed container and a coil which passes through the container; the refrigerant fluid coming from the first inlet 61 or from the second inlet 62 is heated by the coil and evaporates. The gas fraction flows out through the top of the container, while the oil does not evaporate and remains on the bottom of the container. The waste oil is then extracted from the bottom of the container and collected in a waste oil tank (or collector) 12. Collection of the waste oil occurs only at specific times, when EV1 is open.

The circuit comprises a dehydrator filter 34 and a compressor 35, located in the leg of the circuit extending from the top of the distiller 11. The compressor 35 is located downstream of the dehydrator filter 34. The circuit comprises a fan 350 for cooling the compressor 35. The compressor 35 compresses the refrigerant fluid in the gas state and pumps it towards an oil separator 33. In the oil separator 33, the lubricating oil of the compressor is separated, by precipitation, from the compressed refrigerant fluid. In effect, the compressor 35 leaves a certain amount of lubricating oil in the refrigerant fluid during compression. The refrigerant fluid flows out from the top of the oil separator 33 and flows along the coil 110 from an inlet 110A to an outlet 110B. In effect, as a result of compression, the temperature of the fluid increases and is thus suitable for heating the fluid arriving in the distiller 11. The lubricating oil that is separated in the oil separator 33 is sent back to the compressor 35. In an embodiment, the circuit comprises a condenser or radiator 32, and a respective fan 320.

The circuit also comprises a tank 20 for the refrigerant fluid. The refrigerant fluid from the compressor 35 passes through the coil 110 and then through the condenser 32 (if provided) and arrives at the refrigerant fluid tank 20, where it is stored.

The refrigerant fluid continues to be extracted from the vehicle's system and fed into the refrigerant fluid tank 20 along the path indicated above until the vehicle's system is empty.

The circuit comprises a vacuum pump 31 and a respective fan 310. Once all the refrigerant fluid has been extracted from the vehicle's system and fed into the refrigerant fluid tank 20 the vacuum pump 31 is started to create a negative pressure inside the vehicle's system. This operation serves both to eliminate traces of moisture in the vehicle's system and to create the condition for subsequent charging with oil and refrigerant liquid.

Once the negative pressure environment has been created in the circuit and in the vehicle's system, oil charging is started. The circuit comprises a charging oil tank 13; in an embodiment, the circuit may comprise an additional charging oil tank 130. In effect, vehicle systems may use a poly alkylene glycol (PAG) oil or a polyolester (POE) oil. The apparatus might select which charging oil tank to use, between 13 or 130, as a function of the type of vehicle. During charging, the oil is fed into the tank 13 or 130 by the action of the pressure difference between the tank and the vehicle's system. The oil is fed in first because it is heavier than the refrigerant liquid.

After that, charging continues by feeding in the refrigerant fluid. This operation, too, is accomplished by the action of the pressure difference between the refrigerant fluid tank 20 and the vehicle's system. To facilitate the egress of refrigerant fluid from the tank 20, a heater 21 associated with the tank 20 (specifically surrounding the tank 20) is provided. The heater 21 raises the temperature of the refrigerant fluid in the tank 20.

The circuit comprises a charging tap 25, which is opened to allow the egress of refrigerant fluid towards the inlets 61 and 62 (which also serve as outlets).

The circuit also comprises a relief valve 22, associated with the refrigerant fluid tank 20.

The circuit also comprises a low pressure recovery tap 24, connected to an outlet 65 of the circuit. The tap 24 is used for a manual operation carried out only when necessary: in effect, using the tap 24 (and closing the line towards the tank 20) allows access through the outlet 65 to an external bottle for collecting any unwanted immiscible gases which have found their way into the vehicle's system, hence into the circuit of the apparatus.

The circuit comprises a first full hybrid system (FHS) fitting 63 and a second FHS fitting 64. The first FHS fitting 63 and the second FHS fitting 64 are configured to be connected to the first inlet 61 and to the second inlet 62 in the offline configuration. More specifically, the FHS fittings 63 and 64 are used to clean the circuit: after connecting the first inlet 61 and the second inlet 62 to the FHS fittings 63 and 64, the clean command can be given. In this mode, a small amount of refrigerant liquid present in the tank 20 is circulated in the circuit and allows the oil remaining in the circuit to be flushed out. The full hybrid system (FHS) function allows flushing the external pipes of the apparatus, including the internal circuit of the new oil. The apparatus 1 comprises a control unit 4. The apparatus 1 comprises a plurality of electrovalves, controlled by the control unit 4. The plurality of electrovalves includes two or more of the following electrovalves:
- a first electrovalve EV1, having a closed position, which stops the outflow of liquid from the distiller 11, and an open position, which allows the outflow of the waste oil from the distiller 11 to the waste oil collector 12;
- a second electrovalve EV2, having a closed position, which stops the passage of refrigerant fluid towards the distiller 11, and an open position, which allows the passage of the refrigerant fluid towards the distiller 11;
- a third electrovalve EV3, having a closed position, which isolates the vacuum pump 31 from the rest of the circuit, and an open position, which puts the vacuum pump 31 in communication with the rest of the circuit;
- a fourth electrovalve EV4, having a closed position, which stops the passage of the refrigerant fluid from the tank 20 towards the inlets (or outlets) 61 and 62, and an open position, which allows the passage of the refrigerant fluid from the tank 20 towards the inlets (or outlets) 61 and 62;
- a fifth electrovalve EV5, having a closed position, which stops the passage of the charging oil from the charging oil tank 13 towards the inlets (or outlets) 61 and 62, and an open position, which allows the passage of the charging oil from the charging oil tank 13 towards the inlets (or outlets) 61 and 62;
- a sixth electrovalve EV6, having a closed position, which stops the outflow of the lubricating oil from the oil separator 33, and an open position, which allows the outflow of the lubricating oil from the oil separator 33, towards the compressor 35;
- a seventh electrovalve EV7, having a closed position, which stops the passage of the refrigerant fluid from the first inlet 61 to the rest of the circuit (and vice versa), and an open position, which allows the passage of the refrigerant fluid from the first inlet 61 to the rest of the circuit (and vice versa);
- an eighth electrovalve EV8, having a closed position, which stops the passage of the refrigerant fluid from the second inlet 62 to the rest of the circuit (and vice versa), and an open position, which allows the passage of the refrigerant fluid from the second inlet 62 to the rest of the circuit (and vice versa);
- a ninth electrovalve EV9, having a closed position, which stops the passage of the charging oil from the additional charging oil tank 130 (if provided) towards the inlets (or outlets) 61 and 62, and an open position, which allows the passage of the charging oil from the additional charging oil tank 130 towards the inlets (or outlets) 61 and 62;
- a tenth electrovalve EV10, having a closed position, which stops the passage of the refrigerant fluid from the first and/or the second FHS fitting 63, 64 to the rest of the circuit (and vice versa), and an open position, which allows the passage of the refrigerant fluid from the first and/or the second FHS fitting 63, 64 to the rest of the circuit (and vice versa);
- an eleventh electrovalve EV11, having a closed position, which stops the passage of the refrigerant fluid from the condenser 32 to the refrigerant fluid tank 20, and an open position, which allows the passage of the refrigerant fluid from the condenser 32 to the refrigerant fluid tank 20;
- a twelfth electrovalve EV12, having a closed position, which stops the passage of fluid from the tank 20 to an outlet of the circuit, and an open position, which allows the passage of fluid from the tank 20 to an outlet of the circuit. More specifically, operating EV12 allows the air remaining in suspension in the tank to escape to the outside atmosphere. The twelfth electrovalve EV12 is connected in parallel with the relief valve 22.

During extraction of the refrigerant fluid from the vehicle's system, the second, seventh and eighth electrovalves, EV2, EV7 and EV8 are open and the other electrovalves are closed.

During the step of collecting the waste oil in the waste oil tank 12, the first electrovalve EV1 is opened.

During the step of recirculating the lubricating oil from the oil separator 33 to the compressor, the sixth electrovalve EV6 is opened.

During the step of creating negative pressure in the circuit, the third electrovalve EV3 is opened.

During the step of charging the vehicle's system with the refrigerant fluid, the fourth electrovalve EV4 is opened.

During the step of charging the vehicle's system with the charging oil, the fifth electrovalve EV5 or the ninth electrovalve EV9 is opened (depending on the type of oil being used).

It should be noted that in an embodiment, manual valves HV7 and HV8 might be provided instead of the seventh electrovalve EV7 or the eighth electrovalve EV8.

The apparatus 1 comprises a plurality of sensors, connected to the control unit 4. The plurality of sensors comprises two or more of the following sensors:
- a first load sensor 41, associated with the refrigerant fluid tank 20 and configured to detect a measurement parameter representing the weight of the refrigerant fluid tank;
- a second load sensor 42, associated with the waste oil collector 12 and with the charging oil tank 13 (and, if provided, with the additional charging oil tank 130) and configured to detect a measurement parameter representing the weight of the waste oil collector 12 and of the charging oil tank 13 (and, if provided, of the additional charging oil tank 130); more specifically, the second load sensor 42 detects the weight of the tanks 12, 13 (and, if provided, 130) and of their support; during the step of collecting the waste oil in the waste oil tank 12, an increase in the weight detected by the second load sensor 42 can be attributed to filling of the waste oil tank 12; instead, during the step of charging the vehicle's system with charging oil, a decrease in the weight detected by the second load sensor 42 can be attributed to emptying the charging oil tank 13 or 130; in an embodiment, the first load sensor 41 and/or the second load sensor 42 are load cells;
- a first pressure sensor 43, associated with an inlet or outlet leg of the circuit (between the inlets 61 and 62 and the rest of the circuit), and configured to detect a measurement parameter representing the pressure of the refrigerant fluid in the circuit;
- a second pressure sensor 44, associated with the refrigerant fluid tank 20 and configured to detect a measurement parameter representing the pressure of the refrigerant fluid in the tank 20;
- a temperature sensor 45, associated with the refrigerant fluid tank 20 and configured to detect a measurement parameter representing the temperature of the refrigerant fluid in the refrigerant fluid tank 20;
- a compressor sensor 46, associated with the compressor 35 and configured to detect a measurement parameter representing the speed of the compressor 35.

The apparatus 1 may comprise a first pressure gauge 51 and a second pressure gauge 52, configured to detect and display the pressure of the refrigerant fluid at the first and second inlets 61 and 62, respectively.

The apparatus 1 may also comprise a third pressure gauge 53, configured to detect and display the pressure of the refrigerant fluid in the refrigerant fluid tank 20.

The apparatus 1 comprises a memory 40, connected to the control unit 4 and containing reference data. The control unit 4 is configured to compare the measurement parameters detected by the sensors with the reference data to derive diagnostic information regarding the operation of the circuit. The apparatus 1 comprises a local interface 10. In an embodiment, the local interface 10 comprises a display and a keypad; in another embodiment, the local interface 10 comprises a touchscreen display. The local interface 10 is connected to the control unit 4.

The apparatus 1 comprises a remote interface 7; in an embodiment, the remote interface 7 allows controlling the control unit 4; the control unit 4 in turn allows controlling the local interface 10.

The remote interface 7 is configured to show a synoptic representation 72 of the circuit; the synoptic representation 72 shows a diagram of the circuit; preferably also shown are the values of the measurement parameters detected by one or more of the sensors. In an embodiment, the synoptic representation 72 shows the states (on or off) of the actuators. Through the synoptic representation 72, the user can selectively enable or disable the sensors, the electrovalves, the compressor 35 and the vacuum pump 31.

The remote interface 7 comprises an input device (or keypad) 71. Through the input device 71, the user can enter or modify reference parameters or they can relax certain constraints to force the apparatus to operate in anomalous conditions. For example, if the control unit 4 is configured to stop the circuit from operating if the vacuum pump 31 is unable to create a predefined negative pressure, the operator can relax the constraint by modifying the predefined negative pressure through the interface 7. The input device 71 reproduces the keypad present on the local interface 10, thereby allowing it to be controlled from a remote position.

The remote interface 7 comprises a display 73 which reproduces the display of the local interface 10 so that a user, working from a remote position, can obtain the same information that would be available from the local interface 10.

Through the interface 7, the user can perform different tests to identify circuit malfunctions, if any. For example, they can check the operation of the vacuum pump 31 by connecting it to the first pressure sensor 43 (by opening the third electrovalve EV3 and closing the other electrovalves); failure to reach a predetermined negative pressure indicates that the vacuum pump 31 is not functioning correctly; the malfunction diagnosis can be performed by the user, based on personal know-how, or by the control unit 4 (which compares the current negative pressure value with the predetermined value stored in the memory 40). When the control unit 4 performs the diagnosis, it can block the circuit if there is a malfunction. However, if the negative pressure is close to the threshold, the user can set some temporary operating parameters (for example, changing the negative pressure threshold, thus relaxing the constraint) to allow operation in "emergency mode" pending arrival of the necessary spare part.

Through the remote interface 7, the user can identify malfunctions of the compressor 35 by reading the measurement parameter detected by the compressor sensor 46.

Through the remote interface 7, the user can check the level of the waste oil tank 12 and of the charging oil tanks 13 and 130; more specifically, this can be done by reading the history of the measurement parameters detected by the second load sensor 42.

In addition, by isolating the circuit from the external environment and creating a negative pressure with the vacuum pump 31, the user can also check the circuit for leaks. In effect, if there are leaks, air enters the circuit and the pressure detected by the first sensor increases significantly, so the pressure trend over time deviates significantly from a predefined pressure trend.

The apparatus 1 can also be used to perform a diagnosis of the vehicle's system. More specifically, to check whether the vehicle system has a significant micro leak in it, a micro leak test can be performed by creating a vacuum inside the circuit using the vacuum pump 31, then stopping the vacuum pump 31, closing the third electrovalve EV3 and monitoring the differential pressure detected by the first pressure sensor 43 over time: if the pressure remains stable (little or no pressure variations) it means the system is sealed; if the pressure increases (pressure variations exceeding a certain threshold), it means there is a leak. In this case, before proceeding to charging, the user must repair the vehicle's system.

In an embodiment, the micro leak test is performed during the step in which there is a negative pressure in the vehicle's refrigeration system after the vacuum pump has been started. More specifically, once the negative pressure has been created, the vacuum pump is turned off for a predetermined length of time. During this predetermined length of time, the pressure in the circuit is monitored over time. The step of combining the micro leak test with the step of creating the negative pressure in the vehicle's refrigeration system allows saving time.

## Claims

1. A method for charging a refrigeration system of a vehicle by means of an apparatus (1) including a circuit and a diagnostic system, wherein the method comprises the following steps:
- connecting the circuit to the refrigeration system of the vehicle and extracting refrigerant fluid;
- receiving at a distiller (11) the refrigerant fluid extracted from the refrigeration system of the vehicle and separating oil and a gas fraction of the refrigerant fluid;
- compressing the gas fraction of the refrigerant fluid using a compressor (35);
- feeding the refrigerant fluid compressed by a compressor (35) to a refrigerant fluid tank (20);
- collecting the oil separated by the distiller (11) in a waste oil collector (12);
- creating a negative pressure in the refrigeration system of the vehicle by means of a vacuum pump (31);
- charging the refrigeration system of the vehicle with the charging oil from a charging oil tank (13) and with the refrigerant fluid from the refrigerant fluid tank (20),
**characterized in that** it further comprises the following steps:
- switching the apparatus (1), through a control unit (4), between an online configuration, in which the apparatus (1) is connected to the refrigeration system of the vehicle to perform the charging operations, and an offline configuration, in which the apparatus (1) is disconnected from the refrigeration system of the vehicle to perform internal checks for diagnostic purposes;
- in the offline configuration, detecting, with at least one plurality of sensors (41, 42, 43, 44, 45, 46) associated with the circuit, measurement parameters representing physical quantities linked to one or more of the circuit components;
- in the offline configuration, receiving at the control unit (4) the measurement parameters detected by the sensors of the plurality of sensors (41, 42, 43, 44, 45, 46);
- in the offline configuration, sending commands to one or more of the components of the circuit by means of a plurality of actuators controlled by the control unit (4).

2. The method according to claim 1, wherein a user, through an interface (7),
- selectively enables or disables the sensors of the plurality of sensors (41, 42, 43, 44, 45, 46);
- selectively controls the actuators of the plurality of actuators, wherein the control unit (4) generates commands to drive the actuators of the plurality of actuators in response to settings received from the user;
- displays the measurement parameters or diagnostic parameters derived therefrom.

3. The method according to claim 2, comprising the following steps:
- processing the measurement parameters with the control unit (4), based on reference data, and deriving diagnostic information regarding the state of the circuit or a component thereof; wherein the reference data are stored in a memory (40) which includes, for each vehicle type of a plurality of vehicle types, respective reference data associated with that vehicle type;
- updating the memory (40), including a step of saving new reference data associated with a new vehicle type, wherein the memory (40) receives the new reference data from a remote source through an Internet connection.

4. The method according to any of the preceding claims, wherein the plurality of sensors includes a first load sensor (41), associated with the refrigerant fluid tank (20), so the measurement parameter represents the weight of the refrigerant fluid tank (20),
wherein, in the step of processing, the control unit (4) compares the weight of the refrigerant fluid tank (20) detected by the load sensor (41) with a predetermined minimum value and starts the step of charging if the weight of the refrigerant fluid tank (20) exceeds the predetermined minimum value.

5. The method according to any of the preceding claims, wherein the circuit of the apparatus (1) includes the following components:
- the distiller (11), for receiving the refrigerant fluid extracted from the refrigeration system of the vehicle and to separate oil and a gas fraction of the refrigerant fluid;
- the compressor (35), for receiving the gas fraction of refrigerant fluid from the distiller (11) and for compressing it;
- the waste oil collector (12), for collecting the oil separated by the distiller (11);
- the refrigerant fluid tank (20), containing refrigerant fluid and configured to receive the refrigerant fluid compressed by the compressor (35);
- the vacuum pump (31), for generating negative pressure in the refrigeration system of the vehicle;
- the charging oil tank (13), configured to contain the oil used for charging, and wherein the diagnostic system includes:
- the plurality of sensors (41, 42, 43, 44, 45, 46), associated with the circuit for detecting measurement parameters representing physical quantities linked to one or more of the circuit components;
- the plurality of actuators, for controlling one or more of the components of the circuit;
- the control unit (4).

6. The method according to claim 5, wherein the diagnostic system comprises an interface (7) connected to the control unit (4), wherein the interface (7) allows the user to:
- selectively enable or disable the sensors of the plurality of sensors (41, 42, 43, 44, 45, 46);
- selectively control the actuators of the plurality of actuators, wherein the control unit (4) is configured to generate commands to drive the actuators of the plurality of actuators in response to settings received from the user;
- display the measurement parameters or diagnostic parameters derived therefrom.

7. The method (1) according to claim 6, wherein the interface (7) shows a synoptic representation (72) of the circuit to a user.

8. The method according to claim 7, wherein the synoptic representation (72):
- allows the user to selectively enable or disable the sensors of the plurality of sensors (41, 42, 43, 44, 45, 46) and to selectively control the actuators of the plurality of actuators through interactions between the user and the synoptic representation (72), and
- shows the user the measurement parameters detected by the enabled sensors forming part of the plurality of sensors (41, 42, 43, 44, 45, 46).

9. The method according to any of the claims from 6 to 8, wherein the interface (7) is a remote interface.

10. The method according to claim 9, wherein the apparatus (1) comprises a remote processor connected to the control unit (4) and to the interface (7),
wherein the interface (7) comprises an input device (71) configured to receive the settings from the user, wherein the remote processor is configured to send control signals to the control unit (4) as a function of the settings received from the user and wherein the control unit (4) is configured to issue commands to one or more of the actuators of the plurality of actuators, responsive to receiving the control signals.

11. The methid according to any of the preceding claims, wherein the actuators of the plurality of actuators are selected from the following actuators:
- a plurality of electrovalves (EV1, EV2, EV3, EV4, EV5, EV6, EV7, EV8, EV9, EV10, EV11, EV12);
- an actuator of the compressor (35), configured to control the compressor (35);
- an actuator of the vacuum pump (31), configured to control the vacuum pump (31).

12. The method according to any of the preceding claims, wherein the sensors of the plurality of sensors are selected from the following sensors:
- a first load sensor (41), associated with the refrigerant fluid tank (20) and configured to detect a measurement parameter representing the weight of the refrigerant fluid tank (20);
- a second load sensor (42), associated with the waste oil collector (12) and with the charging oil tank (13) and configured to detect a measurement parameter representing the weight of the waste oil collector (12) and/or of the charging oil tank (13);
- a first pressure sensor (43), associated with an inlet or outlet leg of the circuit, connectable to the refrigeration system of the vehicle and configured to detect a measurement parameter representing the pressure of the refrigerant fluid in the inlet or outlet leg;
- a second pressure sensor (44), associated with the refrigerant fluid tank (20) and configured to detect a measurement parameter representing the pressure of the refrigerant fluid in the refrigerant fluid tank (20);
- a temperature sensor (45), associated with the refrigerant fluid tank (20) and configured to detect a measurement parameter representing the temperature of the refrigerant fluid in the refrigerant fluid tank (20);
- a compressor sensor (46), associated with the compressor (35) and configured to detect a measurement parameter representing the speed of the compressor (35).

13. The method according to any of the preceding claims, wherein the circuit has a first inlet (61), which, in operation, is connected to the vehicle's refrigeration system in a low pressure zone, and a second inlet (62), which, in operation, is connected to the vehicle's refrigeration system in a high pressure zone.

14. The method according to any of the preceding claims, wherein the control unit (4) operates a commutation between the online configuration and the offline configuration.

## Patentansprüche

1. Verfahren zum Laden eines Kühlsystems eines Fahrzeugs mittels einer Vorrichtung (1), einschließend einen Kreislauf und ein Diagnosesystem, wobei das Verfahren die folgenden Schritte umfasst:
- Verbinden des Kreislaufs mit dem Kühlsystem des Fahrzeugs und Extrahieren des Kältemittels;
- Empfangen des aus dem Kühlsystem des Fahrzeugs extrahierten Kältemittels an einem Destillator (11) und Trennen von Öl und einem Gasanteil des Kältemittels;
- Verdichten des Gasanteils des Kältemittels unter Nutzung eines Verdichters (35);
- Zuführen des durch einen Verdichter (35) verdichteten Kältemittels zu einem Kältemitteltank (20);
- Sammeln des durch den Destillator (11) getrennten Öls in einem Altölbehälter (12);
- Erzeugen eines Unterdrucks im Kühlsystem des Fahrzeugs mittels einer Vakuumpumpe (31);
- Laden des Kühlsystems des Fahrzeugs mit dem Ladeöl aus dem Ladeöltank (13) und mit dem Kältemittel aus dem Kältemitteltank (20),
**dadurch gekennzeichnet, dass** es ferner die folgenden Schritte umfasst:
- Umschalten der Vorrichtung (1) durch eine Steuereinheit (4) zwischen einer Online-Auslegung, in der die Vorrichtung (1) mit dem Kühlsystem des Fahrzeugs verbunden ist, um die Ladevorgänge durchzuführen, und einer Offline-Auslegung, in der die Vorrichtung (1) vom Kühlsystem des Fahrzeugs getrennt ist, um interne Kontrollen zu Diagnosezwecken durchzuführen;
- in der Offline-Auslegung Erkennen von Messparametern, die physikalische Mengen darstellen, die mit einer oder mehreren der Kreislaufkomponenten verknüpft sind, durch mindestens eine Vielzahl von Sensoren (41, 42, 43, 44, 45, 46), die mit dem Kreislauf assoziiert sind;
- in der Offline-Auslegung Empfangen der von den Sensoren der Vielzahl von Sensoren (41, 42, 43, 44, 45, 46) erkannten Messparameter an der Steuereinheit (4);
- in der Offline-Auslegung Senden von Befehlen an eine oder mehrere der Komponenten des Kreislaufs mittels einer Vielzahl von von der Steuereinheit (4) gesteuerten Aktuatoren.

2. Verfahren nach Anspruch 1, wobei ein Nutzer durch eine Schnittstelle (7)
- die Sensoren der Vielzahl von Sensoren (41, 42, 43, 44, 45, 46) wahlweise aktiviert oder deaktiviert;
- die Aktuatoren der Vielzahl von Aktuatoren wahlweise steuert, wobei die Steuereinheit (4) Befehle generiert, um die Aktuatoren der Vielzahl von Aktuatoren als Reaktion auf vom Nutzer empfangene Einstellungen anzutreiben;
- die daraus abgeleiteten Messparameter oder Diagnoseparameter anzeigt.

3. Verfahren nach Anspruch 2, umfassend die folgenden Schritte:
- Verarbeiten der Messparameter mit der Steuereinheit (4) basierend auf Referenzdaten und Ableiten von Diagnoseinformationen betreffend den Zustand des Kreislaufs oder einer Komponente davon, wobei die Referenzdaten in einem Speicher (40) gespeichert werden, der für einen jeden Fahrzeugtyp einer Vielzahl von Fahrzeugtypen jeweilige mit dem betreffenden Fahrzeugtyp assoziierte Referenzdaten einschließt;
- Aktualisieren des Speichers (40), einschließend einen Schritt zum Speichern neuer, mit einem neuen Fahrzeugtyp assoziierter Referenzdaten, wobei der Speicher (40) die neuen Referenzdaten von einer Fernquelle über eine Internetverbindung empfängt.

4. Verfahren nach einem der vorhergehenden Ansprüche, wobei die Vielzahl von Sensoren einen ersten Beladungssensor (41) einschließt, der mit dem Kältemitteltank (20) assoziiert ist, sodass der Messparameter das Gewicht des Kältemitteltanks (20) darstellt,
wobei die Steuereinheit (4) im Schritt zum Verarbeiten das vom Beladungssensor (41) erkannte Gewicht des Kältemitteltanks (20) mit einem vorbestimmten Mindestwert vergleicht und den Schritt zum Laden startet, wenn das Gewicht des Kältemitteltanks (20) den vorgegebenen Mindestwert überschreitet.

5. Verfahren nach einem der vorhergehenden Ansprüche, wobei der Kreislauf der Vorrichtung (1) die folgenden Komponenten einschließt:
- den Destillator (11) zum Empfangen des aus dem Kühlsystem des Fahrzeugs extrahierten Kältemittels und um Öl und einen Gasanteil des Kältemittels zu trennen;
- den Verdichter (35) zum Empfangen des Kältemittelgasanteils vom Destillator (11) und dessen Verdichten;
- den Altölbehälter (12) zum Sammeln des vom Destillator (11) getrennten Öls;
- den Kältemitteltank (20), der Kältemittel enthält und ausgelegt ist, um das vom Verdichter (35) verdichtete Kältemittel zu empfangen;
- die Vakuumpumpe (31) zum Erzeugen eines Unterdrucks im Kühlsystem des Fahrzeugs;
- den Ladeöltank (13), der ausgelegt ist, um das zum Laden genutzte Öl zu enthalten, und wobei das Diagnosesystem Folgendes einschließt:
- die Vielzahl von Sensoren (41, 42, 43, 44, 45, 46), die mit dem Kreislauf assoziiert sind, zum Erkennen von Messparametern, die physikalische Mengen darstellen, die mit einer oder mehreren der Kreislaufkomponenten verknüpft sind;
- die Vielzahl von Aktuatoren zum Steuern von einer oder mehreren der Komponenten des Kreislaufs;
- die Steuereinheit (4).

6. Verfahren nach Anspruch 5, wobei das Diagnosesystem eine Schnittstelle (7) umfasst, die mit der Steuereinheit (4) verbunden ist, wobei die Schnittstelle (7) dem Nutzer erlaubt,
- die Sensoren der Vielzahl von Sensoren (41, 42, 43, 44, 45, 46) wahlweise zu aktivieren oder zu deaktivieren;
- die Aktuatoren der Vielzahl von Aktuatoren wahlweise zu steuern, wobei die Steuereinheit (4) ausgelegt ist, um Befehle zu generieren, um die Aktuatoren der Vielzahl von Aktuatoren als Reaktion auf vom Nutzer empfangene Einstellungen anzutreiben;
- die daraus abgeleiteten Messparameter oder Diagnoseparameter anzuzeigen.

7. Verfahren (1) nach Anspruch 6, wobei die Schnittstelle (7) einem Nutzer eine synoptische Darstellung (72) des Kreislaufs zeigt.

8. Verfahren nach Anspruch 7, wobei die synoptische Darstellung (72)
- dem Nutzer erlaubt, die Sensoren der Vielzahl von Sensoren (41, 42, 43, 44, 45, 46) wahlweise zu aktivieren oder zu deaktivieren und die Aktuatoren der Vielzahl von Aktuatoren wahlweise zu steuern, und zwar durch Interaktionen zwischen dem Nutzer und der synoptischen Darstellung (72), und
- dem Nutzer die von den aktivierten Sensoren, die einen Teil der Vielzahl von Sensoren (41, 42, 43, 44, 45, 46) bilden, erkannten Messparameter zu zeigen.

9. Verfahren nach einem der Ansprüche 6 bis 8, wobei die Schnittstelle (7) eine Fernschnittstelle ist.

10. Verfahren nach Anspruch 9, wobei die Vorrichtung (1) einen Fernprozessor umfasst, der mit der Steuereinheit (4) und der Schnittstelle (7) verbunden ist,
wobei die Schnittstelle (7) eine Eingabeeinrichtung (71) umfasst, die ausgelegt ist, um die Einstellungen vom Nutzer zu empfangen, wobei der Fernprozessor ausgelegt ist, um Steuersignale an die Steuereinheit (4) abhängig von den vom Nutzer empfangenen Einstellungen zu senden, und wobei die Steuereinheit (4) ausgelegt ist, um Befehle an einen oder mehrere der Aktuatoren der Vielzahl von Aktuatoren als Reaktion auf das Empfangen der Steuersignale auszugeben.

11. Verfahren nach einem der vorhergehenden Ansprüche, wobei die Aktuatoren der Vielzahl von Aktuatoren ausgewählt sind aus den folgenden Aktuatoren:
- einer Vielzahl von Magnetventilen (EV1, EV2, EV3, EV4, EV5, EV6, EV7, EV8, EV9, EV10, EV11, EV12);
- einem Aktuator des Verdichters (35), der ausgelegt ist, um den Verdichter (35) zu steuern;
- einem Aktuator der Vakuumpumpe (31), der ausgelegt ist, um die Vakuumpumpe (31) zu steuern.

12. Verfahren nach einem der vorhergehenden Ansprüche, wobei die Sensoren der Vielzahl von Sensoren ausgewählt sind aus den folgenden Sensoren:
- einem ersten Beladungssensor (41), der mit dem Kältemitteltank (20) assoziiert und ausgelegt ist, um einen Messparameter zu erkennen, der das Gewicht des Kältemitteltanks (20) darstellt;
- einem zweiten Beladungssensor (42), der mit dem Altölbehälter (12) und mit dem Ladeöltank (13) assoziiert und ausgelegt ist, um einen Messparameter zu erkennen, der das Gewicht des Altölbehälters (12) und/oder des Ladeöltanks (13) darstellt;
- einem ersten Drucksensor (43), der mit einem Einlass- oder Auslassstrang des Kreislaufs assoziiert ist, der mit dem Kühlsystem des Fahrzeugs verbindbar und ausgelegt ist, um einen Messparameter zu erkennen, der den Druck des Kältemittels im Einlass- oder Auslassstrang darstellt;
- einem zweiten Beladungssensor (44), der mit dem Kältemitteltank (20) assoziiert und ausgelegt ist, um einen Messparameter zu erkennen, der den Druck des Kältemittels im Kältemitteltank (20) darstellt;
- einem Temperatursensor (45), der mit dem Kältemitteltank (20) assoziiert und ausgelegt ist, um einen Messparameter zu erkennen, der die Temperatur des Kältemittels im Kältemitteltank (20) darstellt;
- einem Verdichtersensor (46), der mit dem Verdichter (35) assoziiert und ausgelegt ist, um einen Messparameter zu erkennen, der die Drehzahl des Verdichters (35) darstellt.

13. Verfahren nach einem der vorhergehenden Ansprüche, wobei der Kreislauf einen ersten Einlass (61), der in Betrieb mit dem Fahrzeugkühlsystem in einer Niederdruckzone verbunden ist, und einen zweiten Einlass (62) aufweist, der in Betrieb mit dem Fahrzeugkühlsystem in einer Hochdruckzone verbunden ist.

14. Verfahren nach einem der vorhergehenden Ansprüche, wobei die Steuereinheit (4) eine Umschaltung zwischen der Online-Auslegung und der Offline-Auslegung vornimmt.

## Revendications

1. Procédé de chargement d'un système de réfrigération d'un véhicule au moyen d'un appareil (1) incluant un circuit et un système de diagnostic, dans lequel le procédé comprend les étapes suivantes :
- raccorder le circuit au système de réfrigération du véhicule et extraire le fluide réfrigérant ;
- recevoir au niveau d'un distillateur (11) le fluide réfrigérant extrait du système de réfrigération du véhicule et séparer l'huile et une fraction gazeuse du fluide réfrigérant ;
- comprimer la fraction gazeuse du fluide réfrigérant en utilisant un compresseur (35) ;
- alimenter le fluide réfrigérant comprimé par un compresseur (35) vers un réservoir de fluide réfrigérant (20) ;
- collecter l'huile séparée par le distillateur (11) dans un collecteur d'huile usagée (12) ;
- créer une pression négative dans le système de réfrigération du véhicule au moyen d'une pompe à vide (31) ;
- charger le système de réfrigération du véhicule avec l'huile de charge provenant d'un réservoir d'huile de charge (13) et avec le fluide réfrigérant provenant du réservoir de fluide réfrigérant (20),
**caractérisé en ce qu'**il comprend en outre les étapes suivantes :
- commuter l'appareil (1), à travers une unité de commande (4), entre une configuration en ligne, dans laquelle l'appareil (1) est connecté au système de réfrigération du véhicule pour effectuer les opérations de chargement, et une configuration hors ligne, dans laquelle l'appareil (1) est déconnecté du système de réfrigération du véhicule pour effectuer des contrôles internes à des fins de diagnostic ;
- en configuration hors ligne, détecter, avec au moins une pluralité de capteurs (41, 42, 43, 44, 45, 46) associés au circuit, des paramètres de mesure représentant des grandeurs physiques liées à un ou plusieurs des composants du circuit ;
- en configuration hors ligne, recevoir au niveau de l'unité de commande (4) des paramètres de mesure détectés par les capteurs de la pluralité de capteurs (41, 42, 43, 44, 45, 46) ;
- dans la configuration hors ligne, envoyer des commandes à un ou plusieurs des composants du circuit au moyen d'une pluralité d'actionneurs commandés par l'unité de commande (4).

2. Procédé selon la revendication 1, dans lequel un utilisateur, par l'intermédiaire d'une interface (7),
- active ou désactive sélectivement les capteurs de la pluralité de capteurs (41, 42, 43, 44, 45, 46) ;
- commande sélectivement les actionneurs de la pluralité d'actionneurs, l'unité de commande (4) générant des commandes pour entraîner les actionneurs de la pluralité d'actionneurs en réponse à des réglages reçus de l'utilisateur ;
- affiche les paramètres de mesure ou de diagnostic qui en sont dérivés.

3. Procédé selon la revendication 2, comprenant les étapes suivantes :
- traiter les paramètres de mesure avec l'unité de commande (4), sur la base de données de référence, et dériver des informations de diagnostic concernant l'état du circuit ou d'un composant de celui-ci ; dans lequel les données de référence sont stockées dans une mémoire (40) qui inclut, pour chaque type de véhicule d'une pluralité de types de véhicules, des données de référence respectives associées à ce type de véhicule ;
- mettre à jour la mémoire (40), incluant une étape de sauvegarder de nouvelles données de référence associées à un nouveau type de véhicule, la mémoire (40) recevant les nouvelles données de référence d'une source distante à travers une connexion Internet.

4. Procédé selon l'une quelconque des revendications précédentes, dans lequel la pluralité de capteurs inclut un premier capteur de charge (41), associé au réservoir de fluide réfrigérant (20), de sorte que le paramètre de mesure représente le poids du réservoir de fluide réfrigérant (20), dans lequel, dans l'étape de traitement, l'unité de commande (4) compare le poids du réservoir de fluide réfrigérant (20) détecté par le capteur de charge (41) à une valeur minimale prédéterminée et commence l'étape de chargement si le poids du réservoir de fluide réfrigérant (20) dépasse la valeur minimale prédéterminée.

5. Procédé selon l'une quelconque des revendications précédentes, dans lequel le circuit de l'appareil (1) inclut les composants suivants :
- le distillateur (11), pour recevoir le fluide réfrigérant extrait du système de réfrigération du véhicule et pour séparer l'huile et une fraction gazeuse du fluide réfrigérant ;
- le compresseur (35), pour recevoir la fraction gazeuse de fluide réfrigérant du distillateur (11) et pour la comprimer ;
- le collecteur d'huile usagée (12), pour collecter l'huile séparée par le distillateur (11) ;
- le réservoir de fluide réfrigérant (20), contenant le fluide réfrigérant et configuré pour recevoir le fluide réfrigérant comprimé par le compresseur (35) ;
- la pompe à vide (31), pour générer une pression négative dans le système de réfrigération du véhicule ;
- le réservoir d'huile de charge (13), configuré pour contenir l'huile utilisée pour charger, et dans lequel le système de diagnostic inclut :
- la pluralité de capteurs (41, 42, 43, 44, 45, 46), associés au circuit pour détecter des paramètres de mesure représentant des grandeurs physiques liées à un ou plusieurs des composants du circuit ;
- la pluralité d'actionneurs, pour commander un ou plusieurs des composants du circuit ;
- l'unité de commande (4).

6. Procédé selon la revendication 5, dans lequel le système de diagnostic comprend une interface (7) connectée à l'unité de commande (4), dans lequel l'interface (7) permet à l'utilisateur de :
- activer ou désactiver sélectivement les capteurs de la pluralité de capteurs (41, 42, 43, 44, 45, 46) ;
- commander sélectivement les actionneurs de la pluralité d'actionneurs, l'unité de commande (4) étant configurée pour générer des commandes pour entraîner les actionneurs de la pluralité d'actionneurs en réponse à des réglages reçus de l'utilisateur ;
- afficher les paramètres de mesure ou de diagnostic qui en sont dérivés.

7. Procédé (1) selon la revendication 6, dans lequel l'interface (7) montre une représentation synoptique (72) du circuit à un utilisateur.

8. Procédé selon la revendication 7, dans lequel la représentation synoptique (72) :
- permet à l'utilisateur d'activer ou de désactiver sélectivement les capteurs de la pluralité de capteurs (41, 42, 43, 44, 45, 46) et de commander sélectivement les actionneurs de la pluralité d'actionneurs à travers des interactions entre l'utilisateur et la représentation synoptique (72), et
- montre à l'utilisateur les paramètres de mesure détectés par les capteurs activés faisant partie de la pluralité de capteurs (41, 42, 43, 44, 45, 46).

9. Procédé selon l'une quelconque des revendications 6 à 8, dans lequel l'interface (7) est une interface distante.

10. Procédé selon la revendication 9, dans lequel l'appareil (1) comprend un processeur distant connecté à l'unité de commande (4) et à l'interface (7), dans lequel l'interface (7) comprend un dispositif d'entrée (71) configuré pour recevoir les réglages de l'utilisateur, dans lequel le processeur distant est configuré pour envoyer des signaux de commande à l'unité de commande (4) en fonction des réglages reçus de l'utilisateur et dans lequel l'unité de commande (4) est configurée pour émettre des commandes à un ou plusieurs des actionneurs de la pluralité d'actionneurs, en réponse à la réception des signaux de commande.

11. Procédé selon l'une quelconque des revendications précédentes, dans lequel les actionneurs de la pluralité d'actionneurs sont sélectionnés parmi les actionneurs suivants :
- une pluralité d'électrovannes (EV1, EV2, EV3, EV4, EV5, EV6, EV7, EV8, EV9, EV10, EV11, EV12) ;
- un actionneur du compresseur (35), configuré pour commander le compresseur (35) ;
- un actionneur de la pompe à vide (31), configuré pour commander la pompe à vide (31).

12. Procédé selon l'une quelconque des revendications précédentes, dans lequel les capteurs de la pluralité de capteurs sont sélectionnés parmi les capteurs suivants :
- un premier capteur de charge (41), associé au réservoir de fluide réfrigérant (20) et configuré pour détecter un paramètre de mesure représentant le poids du réservoir de fluide réfrigérant (20) ;
- un second capteur de charge (42), associé au collecteur d'huile usagée (12) et au réservoir d'huile de charge (13) et configuré pour détecter un paramètre de mesure représentant le poids du collecteur d'huile usagée (12) et/ou du réservoir d'huile de charge (13) ;
- un premier capteur de pression (43), associé à une branche d'entrée ou de sortie du circuit, connectable au système de réfrigération du véhicule et configuré pour détecter un paramètre de mesure représentant la pression du fluide réfrigérant dans la branche d'entrée ou de sortie ;
- un second capteur de pression (44), associé au réservoir de fluide réfrigérant (20) et configuré pour détecter un paramètre de mesure représentant la pression du fluide réfrigérant dans le réservoir de fluide réfrigérant (20) ;
- un capteur de température (45), associé au réservoir de fluide réfrigérant (20) et configuré pour détecter un paramètre de mesure représentant la température du fluide réfrigérant dans le réservoir de fluide réfrigérant (20) ;
- un capteur de compresseur (46), associé au compresseur (35) et configuré pour détecter un paramètre de mesure représentant la vitesse du compresseur (35).

13. Procédé selon l'une quelconque des revendications précédentes, dans lequel le circuit a une première entrée (61), qui, en fonctionnement, est connectée au système de réfrigération du véhicule dans une zone de basse pression, et une seconde entrée (62), qui, en fonctionnement, est connectée au système de réfrigération du véhicule dans une zone de haute pression.

14. Procédé selon l'une quelconque des revendications précédentes, dans lequel l'unité de commande (4) opère une commutation entre la configuration en ligne et la configuration hors ligne.
